# EUROPÄISCHE PATENTSCHRIFT

(11) **EP 4 199 204 B1**
(45) Veröffentlichungstag und Bekanntmachung des Hinweises auf die Patenterteilung: **16.04.2025**
(21) Anmeldenummer: 22211879.6
(22) Anmeldetag: 07.12.2022
(51) Int. Cl.: H01M 50/159, H01G 4/236, H01M 50/172, H01M 50/188, H01M 50/191, H01G 2/10

(54) **GEHÄUSETEIL FÜR EINE ELEKTRISCHE SPEICHEREINRICHTUNG UND ELEKTRISCHE SPEICHEREINRICHTUNG**
HOUSING PART FOR AN ELECTRICAL STORAGE DEVICE AND ELECTRICAL STORAGE DEVICE
PARTIE DE BOÎTIER POUR UN DISPOSITIF DE STOCKAGE ÉLECTRIQUE ET DISPOSITIF DE STOCKAGE ÉLECTRIQUE

(30) Priorität: 16.12.2021 DE 102021133391
(43) Veröffentlichungstag der Anmeldung: 21.06.2023
(73) Patentinhaber: SCHOTT AG, 55122 Mainz (DE)
(72) Erfinder: Hartl, Helmut, 3400 Klosterneuburg (AT)
(74) Vertreter: Schott Corporate IP

(56) Entgegenhaltungen:
- EP-A1- 2 372 815
- EP-A1- 2 876 708
- WO-A1-2018/159180
- CN-U- 207 233 790
- US-A1- 2019 237 740

## Beschreibung

Die Erfindung betrifft ein Gehäuseteil für eine elektrische Speichereinrichtung, insbesondere eine Batterie oder einen Kondensator, umfassend einen Grundkörper und zumindest eine erste Anschlussterminalanordnung mit einem Anschlussstift, welcher durch eine Durchgangsöffnung des Grundkörpers hindurchgeführt ist und über ein Fixiermaterial elektrisch isoliert in der Durchgangsöffnung fixiert ist, wobei der Anschlussstift zumindest an einer Seite der Durchgangsöffnung über diese hervorsteht. Ein weiterer Aspekt der Erfindung betrifft eine elektrische Speichereinrichtung, welche ein Gehäuse mit einem solchen Gehäuseteil umfasst.

Elektrische Speichereinrichtungen wie Batterien oder Kondensatoren umfassen üblicherweise ein Gehäuse und wenigstens eine Speicherzelle. Das Gehäuse schließt die Speicherzelle ein und stellt Anschlussterminals für eine elektrische Kontaktierung der Speichereinrichtung bereit.

Als Batterien im Sinne der Erfindung, werden sowohl eine Einwegbatterie, die nach ihrer Entladung entsorgt und/oder recycelt werden kann, wie auch Akkumulatoren verstanden. Akkumulatoren, bevorzugt Lithium-Ionen-Batterien, sind für verschiedene Anwendungen vorgesehen wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydrid-Batterien ersetzen. Auch der Einsatz der Batterie in Sensoren ist möglich oder im Internet der Dinge.

Unter Speichereinrichtungen im Sinne der Erfindung werden auch Kondensatoren, insbesondere auch Superkondensatoren, verstanden.

Superkondensatoren, auch Supercaps genannt, sind, wie allgemein bekannt ist, elektrochemische Energiespeicher mit besonders hoher Leistungsdichte. Superkondensatoren besitzen im Unterschied zu Keramik-, Folien- und Elektrolytkondensatoren kein Dielektrikum im herkömmlichen Sinne. In ihnen sind insbesondere die Speicherprinzipien der statischen Speicherung elektrischer Energie durch Ladungstrennung in einer Doppelschichtkapazität sowie die elektrochemische Speicherung elektrischer Energie durch Ladungstausch mit Hilfe von Redoxreaktionen in einer Pseudokapazität verwirklicht.

Superkondensatoren umfassen insbesondere Hybridkondensatoren, dabei insbesondere Lithium-Ionen-Kondensatoren. Deren Elektrolyt umfasst üblicherweise ein Lösungsmittel, in dem leitfähige Salze gelöst sind, üblicherweise Lithiumsalze. Superkondensatoren werden vorzugsweise in Anwendungen eingesetzt, in denen eine hohe Zahl von Lade-/Enladezyklen benötigt wird. Superkondensatoren sind insbesondere vorteilhaft im Automobilbereich einsetzbar, insbesondere im Bereich der Rekuperation von Bremsenergie. Andere Anwendungen sind natürlich ebenso möglich und von der Erfindung umfasst.

Lithium-Ionen-Batterien als Speichereinrichtung sind seit vielen Jahren bekannt. Diesbezüglich wird beispielsweise auf "Handbook of Batteries", David Linden, Herausgeber, 2. Auflage, McCrawhill, 1995, Kapitel 36 und 39 verwiesen.

Verschiedene Aspekte von Lithium-Ionen-Batterien sind in einer Vielzahl von Patenten beschrieben.

Beispielsweise seien genannt:
US 961,672 A1, US 5,952,126 A1, US 5,900,183 A1, US 5,874,185 A1,
US 5,849,434 A1, US 5,853,914 A1, sowie US 5,773,959 A1.

Lithium-Ionen-Batterien, insbesondere für Anwendungen in einer Automobilumgebung, weisen in der Regel eine Vielzahl von einzelnen Batteriezellen auf, die miteinander in Reihe und/oder in Serie geschaltet werden. Die miteinander in Reihe bzw. in Serie geschalteten Batteriezellen werden zu sogenannten Batteriepacks zusammengefasst, mehrere Batteriepacks dann zu einem Batteriemodul, das auch als Lithium-Ionen-Batterie bezeichnet wird. Jede einzelne Batteriezelle besitzt Elektroden, die aus einem Gehäuse der Batteriezelle herausgeführt werden. Gleiches gilt für Gehäuse von Superkondensatoren.

Insbesondere für die Anwendung von Lithium-Ionen-Batterien in der Automobilumgebung muss eine Vielzahl von Problemen wie Korrosionsbeständigkeit, Beständigkeit bei Unfall oder Schwingungsfestigkeit gelöst werden. Ein weiteres Problem ist die Dichtheit, insbesondere die hermetische Dichtheit, über einen langen Zeitraum.

US 2019/237740 A1 beschreibt eine Batterie mit einer in einem Gehäuse angeordneten Elektrodenanordnung, wobei ein Deckel eine Gehäuseöffnung abdeckt. Der Deckel weist eine Durchgangsöffnung auf, durch die ein Schaft eines inneren Terminals hindurchgeführt ist und über eine mehrteilige Kunststoffdichtung elektrisch isolierend in der Durchgangsöffnung gehalten wird. An zumindest einer Seite der Durchgangsöffnung ist ein weiteres Terminal mit einer Hülse vorgesehen, welches eine Durchgangsöffnung aufweist, wobei ein hervorstehender Teil des Schafts in die Hülse eingreift. Hülse und Schaft werden durch Druckschweißen miteinander verbunden, indem die Hülse verformt wird, wobei zugleich ein zwischen dem Deckel und der Hülse angeordnetes Isolationselement festgeklemmt wird.

EP 2 876 708 A1 offenbart ein Gehäuseteil mit ähnlicher Terminalanordnung wie in US 2019/237740 A1. Zwischen den Terminals und dem Gehäuseteil sind jeweils vorgeformte Dichtungen zur mechanischen Abdichtung eingesetzt. Ein Isolationselement ist zwischen dem Terminal und dem Gehäuseteil angeordnet.

Zudem ist es für eine hohe Speicherdichte gewünscht, den Anteil passiver Teile wie das Gehäuse am Gesamtaufbau einer Speichereinrichtung zu reduzieren. Entsprechend werden Gehäuse mit geringen Materialstärken bevorzugt. Beispiele für auf möglichst geringe Bauhöhe und geringe Materialstärken ausgelegte Gehäuse für elektrische Speichereinrichtungen sind beispielsweise aus DE 10 2014 016 601 A1 und WO2020/104571 A1 bekannt.

Nachteilig an den bekannten Gehäusen für elektrische Speichereinrichtung ist jedoch, dass bei den geringen Materialstärken der Gehäuse bei hohen Innendrücken eine Verformung auftreten kann. Insbesondere im Bereich der Deckel, an denen üblicherweise die elektrischen Durchführungen und Anschlussterminals angeordnet sind, sind derartige Formveränderungen unerwünscht.

Es ist daher eine Aufgabe der Erfindung ein Gehäuseteil, insbesondere ein Deckelteil bereitzustellen, welches bei Beibehaltung einer besonders kompakten Bauweise besonders druckbeständig und biegesteif ist.

### Offenbarung der Erfindung

Es wird ein Gehäuseteil für eine elektrische Speichereinrichtung, insbesondere eine Batterie oder einen Kondensator vorgeschlagen. Das Gehäuseteil umfasst einen Grundkörper und zumindest eine erste Anschlussterminalanordnung mit einem Anschlussstift, welcher durch eine Durchgangsöffnung des Grundkörpers hindurchgeführt ist und über ein Fixiermaterial elektrisch isoliert in der Durchgangsöffnung fixiert ist, wobei der Anschlussstift zumindest an einer Seite der Durchgangsöffnung über diese hervorsteht. Ferner ist vorgesehen, dass zumindest an einer Seite der Durchgangsöffnung ein Anschlusspad vorgesehen ist, welches eine Öffnung aufweist, welche als Durchgangsöffnung oder als Sackloch ausgebildet ist, wobei der hervorstehende Teil des Anschlussstifts in die Öffnung eingreift und im Bereich dieser Öffnung elektrisch mit dem zumindest einen Anschlusspad verbunden ist und wobei das zumindest eine Anschlusspad elektrisch isolierend mit einem Isolationsmaterial an dem Grundkörper befestigt ist, wobei es sich bei dem Isolationsmaterial um einen elektrisch isolierenden Klebstoff oder um ein elektrisch isolierendes Gussmaterial handelt. Das Fixiermaterial ist ausgewählt aus einem Glas oder einer Glaskeramik, und die Verbindung zwischen dem Fixiermaterial und dem Anschlussstift sowie zwischen dem Fixiermaterial und der Wandung der Durchgangsöffnung ist hermetisch dicht, wobei ein erster Wärmeausdehnungskoeffizient des Grundkörpers größer ist als ein zweiter Wärmeausdehnungskoeffizient des Fixiermaterials.

Das Gehäuseteil ist dazu eingerichtet, mit weiteren Gehäuseteilen zu einem Gehäuse für eine elektrische Speichereinrichtung zusammengefügt zu werden, wobei das Gehäuseteil dabei die Anschlussterminals der Speichereinrichtung aufweist. Je nach Art der Speichereinrichtung können ein oder mehrere Anschlussterminals vorgesehen sein. Beispielsweise kann die Speichereinrichtung zwei erste Anschlussterminals umfassen, welche dann beispielsweise als ein positives Terminal und ein negatives Terminal dienen können. Umfasst das Gehäuseteil nur eine einzige erste Anschlussterminalanordnung stellt bevorzugt der Grundkörper des Gehäuseteils selbst oder ein weiteres Gehäuseteil einen weiteren Anschlussterminal dar, beispielsweise ein negatives Terminal bzw. ein Masseterminal. Zusätzlich zu der zumindest einen ersten Anschlussterminalanordnung kann das Gehäuseteil auch eine oder mehrere davon verschiedene weitere Anschlussterminalanordnungen aufweisen.

Die zumindest eine Anschlussterminalanordnung weist einen Anschlussstift auf, welcher durch eine Durchgangsöffnung des Grundkörpers hindurchgeführt ist und in dieser Durchgangsöffnung von einem Fixiermaterial elektrisch isolierend gehalten wird. Der Grundkörper, der Anschlussstift und das Fixiermaterial bilden dabei eine Metall-Fixiermaterial-Durchführung aus, bei der das Fixiermaterial jeweils gegen den Anschlussstift und eine Innenwandung der Durchgangsöffnung abdichtet. Dabei ist es vorteilhaft, wenn das Fixiermaterial nicht über die Durchgangsöffnung hinaussteht, sondern im Wesentlichen bündig mit der Durchgangsöffnung abschließen oder sogar etwas kürzer als die Länge der Durchgangsöffnung gewählt ist.

Die Verbindung zwischen dem Fixiermaterial und dem Anschlussstift sowie zwischen dem Fixiermaterial und der Wandung der Durchgangsöffnung ist hermetisch dicht. Unter hermetischer Dichtheit wird insbesondere verstanden, dass bei einem Druckunterschied von 1 bar die Helium-Leckrate bevorzugt < 1·10⁻⁷ mbar ls⁻¹, besonders bevorzugt < 1·10⁻⁸ mbar ls⁻¹ und am meisten bevorzugt < 1 ·10⁻⁹ mbar ls⁻¹ liegt.

Bei der ersten Anschlussterminalanordnung stellt das zumindest eine Anschlusspad einen Anschlussbereich dar, an dem elektrische Leiter mit der ersten Anschlussterminalanordnung verbunden werden können. Ein an einer im fertigen Gehäuse außen liegenden Seite des Gehäuseteils angeordnetes Anschlusspad stellt damit einen Anschlussbereich dar, an dem ein das Gehäuse umfassender elektrischer Energiespeicher elektrisch kontaktierbar ist. Ein an einer im fertigen Gehäuse innen liegenden Seite angeordnetes Anschlusspad stellt einen Anschlussbereich dar, an dem innenliegende Komponenten wie Speicherzellen, beispielsweise eine Batteriezelle oder eine Kondensatorzelle angebunden werden können.

Um das zumindest eine Anschlusspad elektrisch mit dem Anschlussstift verbinden zu können, werden diese dicht aneinander angrenzend angeordnet. Hierzu greift der über die Durchgangsöffnung im Grundkörper hinausragende Teil des Anschlussstifts in die Öffnung im Anschlusspad ein, egal ob die Öffnung im Anschlusspad als Durchgangsöffnung oder als Sackloch ausgebildet ist. Entsprechend weist bei Ausbildung als Sackloch die Öffnung in Richtung des Anschlussstifts, wobei in dieser Ausführungsvariante der Anschlussstift durch das Anschlusspad überdeckt wird. Hierdurch wird vorteilhafterweise erreicht, dass das Material des Anschlussstifts vollständig durch die erste Anschlussterminalanordnung überdeckt ist und damit insbesondere gegen Einflüsse aus der Umwelt oder den im Inneren des Gehäuses vorhandenen Medien abgeschirmt ist.

Diese Anordnung erleichtert zudem eine präzise Positionierung des zumindest einen Anschlusspads bei der Fertigung, da der Anschlussstift wie eine Positionierungshilfe eine genaue Positionierung des Anschlusspads sicherstellt.

Um eine gute Verbindung zwischen dem zumindest einen Anschlusspad und dem Anschlussstift zu ermöglichen ist es bevorzugt, dass der Anschlussstift mindestens um 0,1 mm bis 2 mm, besonders bevorzugt 0,2 mm bis 1 mm über die Durchgangsöffnung und damit über den Grundkörper hinausragt.

Die zumindest eine erste Anschlussterminalanordnung kann genau ein Anschlusspad aufweisen. In einer vorteilhaften Ausführungsform der ersten Anschlussterminalanordnung befindet sich das Anschlusspad an einer im fertigen Gehäuse außen liegenden Seite des Gehäuseteils. In einer alternativen vorteilhaften Ausführungsform der ersten Anschlussterminalanordnung befindet sich das Anschlusspad an einer im fertigen Gehäuse innen liegenden Seite des Gehäuseteils.

Eine besonders vorteilhafte Ausführungsform der ersten Anschlussterminalanordnung sieht vor, dass im fertigen Gehäuse sowohl an der außen liegenden als auch an der innen liegenden Seite des Gehäuseteils jeweils ein Anschlusspad angeordnet ist. D.h., die erste Anschlussterminalanordnung kann auf beiden Seiten der Durchgangsöffnung und damit auf beiden Seiten des Gehäuseteils jeweils ein Anschlusspad aufweisen. In diesem Fall ist es bevorzugt, wenn der Anschlussstift an beiden Seiten der Durchgangsöffnung über diese hervorsteht und auf beiden Seiten der Durchgangsöffnung Anschlusspads angeordnet sind, welche jeweils eine Öffnung aufweisen, wobei jeweils der hervorstehende Teil des Anschlussstifts in die jeweilige Öffnung eingreift und im Bereich dieser Öffnung elektrisch mit dem jeweiligen Anschlusspad verbunden ist.

Das zumindest eine Anschlusspad wird elektrisch mit dem Anschlussstift verbunden. Diese Verbindung kann zugleich auch eine mechanische Verbindung darstellen, so dass das zumindest eine Anschlusspad nicht nur über das Isolationsmaterial am Grundkörper, sondern auch an dem Anschlussstift befestigt ist. Bei dem Isolationsmaterial handelt es sich um einen elektrisch isolierenden Klebstoff oder um ein elektrisch isolierendes Gussmaterial.

Im Fall eines Klebstoffs als Isolationsmaterial sind insbesondere Epoxidharze geeignet. Der Klebstoff kann zudem auch in Form eines Klebebandes, insbesondere eines doppelseitigen Klebebandes ausgeführt werden. Als Gussmaterial sind insbesondere thermoplastische oder duroplastische Kunststoffe geeignet.

Isoliermaterialien für außen liegende bzw. innen liegende Anschlusspads können unterschiedlich oder gleich sein. Dies ermöglicht die Anpassung an unterschiedliche Anforderungen in Abhängigkeit von der Lage der Anschlusspads.

Bei der Auswahl eines geeigneten Klebstoffs, insbesondere eines geeigneten Epoxidharzes, oder eines geeigneten Gussmaterials spielen bestimmte Auswahlkriterien eine Rolle:
Da bei dem Zusammenbau des Gehäuseteils bzw. der Speichereinrichtung, z.B. beim Herstellen einer Verbindung zwischen Anschlussstift und Anschlusspad und/oder einer Verbindung zwischen Anschlusspad und Anschlüssen wie Anschlussfahnen, Verfahren wir Löten oder Scheißen zum Einsatz kommen können, ist es vorteilhaft, wenn der Klebstoff thermisch belastbar ist, um zumindest kurzzeitig den zum Löten oder Schweißen notwendigen Temperaturen standhalten zu können. Es ist vorteilhaft, wenn der Klebstoff zumindest kurzzeitig auf Temperaturen von mehr als 150°C, vorzugsweise mindestens 220°C aufgeheizt werden kann, ohne dass der Klebstoff verdampft oder degeneriert, d.h. es zu einer signifikanten Änderung der initialen Klebekraft kommt. Unter dem Begriff "kurzzeitig" wird hier ein Zeitraum von mindestens 1 min bis 5 min verstanden.

Alternativ kann es im Hinblick auf den üblichen Betrieb und mögliche Unfälle/Störfälle beim Einsatz einer elektrischen Speichereinrichtung vorteilhaft sein, wenn der Klebstoff dauerhaft bis mindestens 80°C, vorzugsweise bis mindestens 100°C thermisch stabil ist. Vorzugsweise ist der Klebstoff dauerhaft im Bereich von -40°C bis +120°C, vorteilhaft im Bereich von -40°C bis +150°C thermisch stabil.

Gemäß einer Variante der Erfindung bevorzugt sind Klebstoffe, die in Bezug auf die thermische Beständigkeit beide Eigenschaften vereinen, z.B. dauerhaft von -40°C bis +150°C thermisch stabil sind und kurzzeitig Temperaturbelastungen mehr als 150°C standhalten.

Neben der dauerhaften und/oder kurzzeitigen Temperaturstabilität sollte der Klebstoff außerdem eine gute Beständigkeit gegenüber äußeren Einflüssen insbesondere von Flüssigkeiten, Aerosolen und/oder Gasen aufweisen. In Abhängigkeit von der Seite des Gehäuseteils, an der sich das Anschlusspad im fertigen Gehäuse befindet, kann dabei zwischen einer Feuchtigkeitsbeständigkeit, auch Klimabeständigkeit oder Witterungsbeständigkeit, und einer chemischen Beständigkeit, z.B. Beständigkeit gegenüber Batterie-Elektrolyten, unterschieden werden:
Für die Befestigung eines Anschlusspads, das an einer im fertigen Gehäuse außen liegenden Seite des Gehäuseteils angeordnet ist, ist es von Vorteil, wenn der Klebstoff einen Temperatur-Luftfeuchte-Test besteht. Dafür wird z.B. eine Einheit aus Gehäuseteil mit erfindungsgemäßer Anschlussterminalanordnung mit aufgeklebtem Anschlusspad in einer Klimakammer für 1000h einer Temperatur von 85 °C und einer relativen Luftfeuchtigkeit von 85 % ausgesetzt. Die Einheit wird anschließend mechanischen Belastungen, insbesondere Schwer- und Biegebelastungen, ausgesetzt, um zu prüfen, inwieweit die initiale Klebkraft noch vorhanden ist. Der Test gilt als bestanden, wenn der Kleber nach dem Test noch mindestens 80% seiner initialen Klebekraft aufweist.

Für die Befestigung eines Anschlusspads, das an einer im fertigen Gehäuse innen liegenden Seite des Gehäuseteils angeordnet ist, ist es von Vorteil, wenn der Klebstoff eine ausreichende Elektrolytbeständigkeit, Beständigkeit gegenüber Leitsalze etc. aufweist. Für die Bestimmung der Beständigkeit kann der Klebstoff beispielsweise in ein zu testendes Medium bei 60°C für 20 Tage eingelegt und anschließend das Medium im Hinblick auf Bestandteile, die aus dem Klebstoff ausgelaugt wurden, analysiert werden. Die Auslaugung ist ein Maß für die Beständigkeit gegenüber dem jeweiligen Medium. Ferner können auch sichtbare Veränderungen am Klebstoff und/oder Medium, z.B. farbliche Veränderungen, Informationen über die Beständigkeit geben.

Da an der innen liegenden Seite des Gehäuseteils andere Bedingungen herrschen als an der außen liegenden Seite, können für innen und außen jeweils unterschiedliche Klebstoffe, insbesondere Epoxidharze, eingesetzt werden, um die Anschlusspads zu befestigen.

Bevorzugt ist jedoch ein Klebstoff, der sowohl für den Einsatz an der außen liegenden Seite des Gehäuseteils als auch für den Einsatz an der innenliegenden Seite des Gehäuseteils geeignet ist.

Die genannten Auswahlkriterien gelten entsprechend auch für ein elektrisch isolierendes Gussmaterial.

Bevorzugt ist das zumindest eine Anschlusspad vollflächig unter Verwendung eines Klebstoffs oder unter Verwendung eines Gussmaterials als Isolationsmaterial elektrisch isolierend an dem Grundkörper befestigt.

Alternativ kann das Anschlusspad auch nur partiell, d.h. auf Teilen seiner Fläche, unter Verwendung eines Klebstoffs oder unter Verwendung eines Gussmaterials als Isolationsmaterial elektrisch isolierend an dem Grundkörper befestigt sein. Auch auf diese Weise kann eine ausreichend sichere Befestigung realisiert sein. Vorteilhaft dabei ist, wenn sich an den äußeren Rändern zwischen Anschlusspad und Grundkörper Klebstoff bzw. Gussmaterial befindet, so dass kein zugänglicher Spalt zwischen den genannten Bauteilen verbleibt.

Die zumindest eine erste Anschlussterminalanordnung führt bereits bei Anordnung eines Anschlusspads zu einer Versteifung des Gehäuseteils, wodurch dieses insbesondere bei Druckbeaufschlagung nur geringen Verformungen unterliegt. Bevorzugt sind dabei das Isolationsmaterial und das bzw. die Anschlusspads derart ausgestaltet und angeordnet, dass die mindestens eine erste Anschlussterminalanordnung zusammen mit dem Grundkörper im Bereich der Durchgangsöffnung eine Biegefestigkeit aufweist, welche mindestens doppelt so hoch ist wie die Biegefestigkeit des Grundkörpers ohne die erste Anschlussterminalanordnung.

Des Weiteren schützt die einseitige und insbesondere die beidseitige Anordnung der Anschlusspads die Metall-Fixiermaterialdurchführung des Anschlussstifts. Insbesondere bei einer beidseitigen Ausführung ist der Anschlussstift mechanisch vor Einflüssen der Umgebung wie Stoße oder dergleichen geschützt. Mechanische Einwirkungen von außen werden von Isolationsmaterial und dem Anschlusspad abgefangen und auf das Gehäuse übertragen.

Bevorzugt ist das zur Verbindung des oder der Anschlusspads verwendete Isolationsmaterial derart angeordnet und ausgebildet, dass das Isolationsmaterial das Fixiermaterial vollständig überdeckt. Durch die Abdeckung des Fixiermaterials mit dem Isolationsmaterial wird dieses vorteilhafter Weise nicht nur vor mechanischen Einflüssen, sondern auch vor Feuchtigkeit oder Einwirkung anderer Substanzen geschützt.

Bevorzugt ist das zumindest eine Anschlusspad derart angeordnet und eingerichtet, dass der Anschlussstift nicht über die Öffnung des zumindest einen Anschlusspads hinausragt. Hierdurch wird insbesondere bei Ausbildung der Öffnung als Durchgangsöffnung erreicht, dass die durch das Anschlusspad bereitgestellt Verbindungsfläche nicht durch herausragende Teile gestört wird und beispielsweise auch große Anschlussfahnen oder elektrische Leiter gut mit dem Anschlusspad verbunden werden können.

Bevorzugt entspricht eine Form der Öffnung des zumindest einen Anschlusspads einer Querschnittsform des Anschlussstifts, wobei die Größe der Öffnung bevorzugt 0,02 mm bis 0,1 mm größer gewählt ist, als die entsprechende Größe des Anschlussstifts. Hierdurch wird erreicht, dass ein Spalt zwischen dem zumindest einen Anschlusspad und dem Anschlussstift möglichst gering ausfällt und sich leicht eine zuverlässige elektrische Verbindung zwischen beiden herstellen lässt. Gleichzeitig wird es aber ermöglicht, Fertigungstoleranzen auszugleichen, so dass der Anschlussstift immer zuverlässig und ohne des Anschlusspad zu beschädigen oder zu Verformen in dessen Öffnung eingreifen kann. Durch Umformen des Anschlusspads und/oder des Anschlussstifts nach dem Anordnen auf dem Grundkörper kann der verbleibende Spalt weiter reduziert oder sogar vollständig geschlossen werden. Hierdurch kann auch die elektrische Verbindung direkt hergestellt oder zumindest verbessert werden.

Bevorzugt ist eine Verbindung zwischen dem Anschlussstift und dem zumindest einen Anschlusspad als eine leitfähige Klebeverbindung oder eine Schweißverbindung ausgeführt. Auch ein Verlöten ist zum elektrisch leitfähigen Verbinden denkbar. Im Fall einer als Durchgangsöffnung ausgebildeten Öffnung verläuft die Verbindung bevorzugt entlang der Kontur der Öffnung des zumindest einen Anschlusspads. Im Fall einer als Sackloch ausgebildeten Öffnung wird die Verbindung bevorzugt vollflächig ausgestaltet.

Für das Ausbilden einer Schweißverbindung kann beispielsweise Laserschweißen, Widerstandsschweißen, Ultraschallschweißen oder Reibschweißen verwendet werden.

Das zumindest eine Anschlusspad stellt vorteilhafter Weise gegenüber der Querschnittsfläche des Anschlussstifts eine deutlich vergrößerte Anschlussfläche bereit. Das Herstellen der Metall-Fixiermaterial-Durchführung kann vorteilhafterweise getrennt von dem Anordnen und Verbinden des zumindest eine Anschlusspads erfolgen, so dass sich durch Anpassen der Form und Größe des Anschlusspads die für elektrische Kontaktierungen bereitstehenden Anschlussflächen leicht je nach Anforderung an das Gehäuseteil anpassen lassen, ohne dass die Metall-Fixiermaterial-Durchführung geändert oder angepasst werden muss. Dabei kann die Form eines außenliegenden Anschlusspads unabhängig von einer Form eines innenliegenden Anschlusspads gewählt werden, so dass jeweils optimale Formen und Anordnungen für die elektrische Kontaktierung gewählt werden können.

Bevorzugt weist dabei das zumindest eine Anschlusspad eine Form auf, welche ausgewählt ist aus runden Formen wie Kreisen, oder Ellipsen oder ausgewählt ist aus polygonalen Formen wie Rechtecken, Quadraten, Dreiecken, oder Sechsecken, jeweils gegebenenfalls mit abgerundeten Ecken. Grundsätzlich kann die Form des zumindest einen Anschlusspads der Anforderung entsprechend angepasst gewählt werden.

Die Abmessungen der Anschlusspads der ersten Anschlussterminalanordnung, also deren Breite und Länge, sind bevorzugt derart gewählt, dass eine große Fläche für das Anschweißen oder Löten von Anschlüssen wie Anschlussfahnen bereitgestellt wird. Alternativ können Anschlüsse zur Befestigung auch genietet oder verpresst sein. Diese Abmessungen können wesentlich größer als die durch übliche Anschlussstifte allein bereitgestellte Anschlussflächen sein. Vorteilhaft wird somit erreicht, dass die Form und Größe von Anschlussbereichen, an denen elektrische Verbindungen hergestellt werden, kundenspezifisch angepasst werden können, ohne dass die eigentliche elektrische Durchführung des Anschlussstifts durch das Gehäuseteil angepasst oder modifiziert werden muss. Insbesondere können auch eckige Formen leicht erzeugt werden.

An glatten Oberflächen kann ein Anhaften des Isolationsmaterials erschwert sein. Um das Anhaften des Isolationsmaterials an dem zumindest einen Anschlusspad und/oder dem Grundkörper zu verbessern, ist es bevorzugt, an den jeweiligen Oberflächen von Anschlusspad und/oder Grundkörper, die an das Isolationsmaterial angrenzen, Strukturen anzuordnen, durch die die jeweilige Oberfläche aufgeraut wird und/oder durch die Hinterschneidungen entstehen, in denen sich das Isolationsmaterial verkrallen kann.

Bevorzugt weist der Grundkörper zumindest in einem Verbindungsbereich, in dem der Grundkörper mit dem zumindest einem Anschlusspad verbunden wird, und/oder das zumindest eine Anschlusspad an der zum Grundkörper weisenden Seite eine Mikrostrukturierung auf. Durch diese Mikrostrukturierung wird ein Anhaften des Isolationsmaterials verbessert und somit eine Festigkeit der Verbindung zwischen dem zumindest eine Anschlusspads und dem Grundkörper erhöht.

Bei der Mikrostrukturierung kann es sich insbesondere um eine Vielzahl von Rillen und/oder Vertiefungen handeln, welche ähnlich wie die aus DE 10 2017 123 278 A1 bekannten Mikrostrukturen aufgebaut und erzeugt werden können. Die Tiefe der Mikrostrukturen wird für das Verbessern der Haftung des Isolationsmaterials bevorzugt etwas größer gewählt, als für die dort beschriebenen Mikrostrukturen für das Steuern des Flusses eines metallischen Lotmaterials.

Bevorzugt sind die Vertiefungen der Mikrostruktur laserstrukturierte Bereiche in der Oberfläche des Grundkörpers und/oder des Anschlusspads. Vorteilhaft können diese laserstrukturierten Bereiche laserablatierte Bereiche und/oder durch Laserstrahlung thermisch lokal umgeformte und/oder durch laserinduzierte Druckeinwirkung lokal umgeformte Bereiche sein. Selbstverständlich sind jegliche Kombinationen möglich.

Alternativ oder zusätzlich können andere Verfahren zur Herstellung der Mikrostrukturierung angewendet werden, wie beispielsweise das Einprägen durch mikrostrukturierte Stempel und/oder materialabtragende Verfahren wie Schleifen und/oder Ritzen usw..

Vorteilhaft weist die Mikrostrukturierung die Form von Rinnen auf und/oder die Mikrostrukturierung umfasst oder besteht aus Vertiefungen mit runden und/oder ovalen Durchmessern. Ebenso möglich sind rechteckige Durchmesser, insbesondere mit abgerundeten Ecken. Besonders vorteilhaft sind die Vertiefungen kraterförmig und/oder topfförmig. Diese Formen lassen sich besonders günstig durch Laserablation erzeugen.

Bevorzugt weisen die Vertiefungen der Mikrostrukturierungen eine Tiefe von mindestens 1 µm, besonders bevorzugt von mindestens 10 µm und besonders vorteilhaft von mindestens 100 µm auf. Bis zu einer Tiefe von 200 µm werden die Vertiefungen als Mikrostrukturen bezeichnet. Diese Tiefe wird gemessen von der Ebene der Oberfläche des Grundkörpers außerhalb der Mikrostrukturierung bis zum tiefsten Punkt der Mikrostrukturierung, d.h. beispielsweise bei kraterförmigen Vertiefungen von der Ebene der Oberfläche des Grundkörpers außerhalb der Mikrostrukturierung bis zum tiefsten Punkt des Kraterbodens.

Bevorzugt weist der Grundkörper und/oder das zumindest eine Anschlusspad Vertiefungen oder Strukturen mit zumindest einer Hinterschneidung auf, in die das Isolationsmaterial zur Verbindung des Grundkörpers mit dem zumindest einen Anschlusspad eingreift.

Beispielsweise können hierzu schräg verlaufende Rillen in die Oberflächen von Grundkörper und/oder Anschlusspad eingearbeitet werden. Auch ist es denkbar, den Rand des zumindest einen Anschlusspads derart nach innen umzufalten, dass eine umlaufende Rinne als Hinterschneidung ausgebildet wird.

Das Material für das zumindest eine Anschlusspad ist bevorzugt ein Metall mit guter elektrischen Leitfähigkeit. Das Material des zumindest einen Anschlusspads besteht aus einem oder umfasst bevorzugt ein Material ausgewählt aus Aluminium, Aluminiumlegierungen, Kupfer und Kupferlegierungen, insbesondere Messing und Bronze. Daneben ist es denkbar, sogenannte Kontaktwerkstoffe als Material für das zumindest eine Anschlusspad auszuwählen. Die Kontaktwerkstoffe zeichnen sich durch eine gute Beständigkeit gegen Oxidation aus und sind auch beständig gegen Abnutzung durch Funken und Lichtbögen. Geeignete Kontaktwerkstoffe umfassen insbesondere Silber, Gold und Platin. Geeignete Legierungen als Kontaktwerkstoff umfassen insbesondere Silber-Nickel und Silber-Zinn-Oxid.

Die erste Anschlussterminalanordnung kann auf verschiedene Weisen leicht erhalten werden. Zunächst wird die elektrische Durchführung durch den Grundkörper ausgebildet. Hierzu kann beispielsweise ein Grundkörper, ein Rohling für das Fixiermaterial und der Anschlussstift bereitgestellt und in einem Temperaturbehandlungsschritt eine Metall-Fixiermaterial Durchführung erhalten werden. Durch entsprechende Dimensionierung und Anordnung des Anschlussstifts steht dieser an einer oder an beiden Seiten über die Durchgangsöffnung im Grundkörper hervor und kann dann an diesen Seiten mit einem bzw. den Anschlusspad(s) verbunden werden.

In einer Variante werden die Anschlusspads durch Ausstanzen aus einem bereits mit dem Isolationsmaterial, insbesondere einem Klebstoff, beschichteten Blechmaterial erhalten. Das Anschlusspad wird dann über dem hervorstehenden Teil des Anschlussstifts positioniert und an den Grundkörper angedrückt.

Alternativ dazu ist es aber selbstverständlich möglich, die Anschlusspads aus unbeschichtetem Blech auszustanzen und einen Klebstoff erst kurz vor dem Anordnen des Anschlusspads auf dieses und/oder auf den Grundkörper aufzutragen.

Für das Verwenden eines Gussmaterials als Isolationsmaterial können das Gehäuseteil und das Anschlusspad in eine Spritzgussform eingelegt werden. Anschließend wird das Isolationsmaterial in die Form eingespritzt.

Bevorzugt umfasst das Gehäuseteil ferner mindestens eine zweite Anschlussterminalanordnung, bei der ein Anschlussbereich durch eine Erhebung im Grundkörper oder durch ein weiteres Anschlusspad gebildet ist, welches elektrisch leitfähig mit dem Grundkörper verbunden ist. Hierdurch wird es ermöglicht, auch ohne das Vorhandensein einer elektrischen Durchführung durch den Grundkörper einen Anschlussbereich am Gehäuseteil bereitzustellen, insbesondere einen als Masseterminal oder negatives Terminal ausgebildeten Anschlussbereich.

Bei der als Erhebung ausgeführten Alternative wird vorteilhafterweise für das Ausbilden der zweiten Anschlussterminalanordnung kein weiteres Bauelement benötigt. Es werden somit insbesondere Material und Gewicht eingespart. Bevorzugt wird die Erhebung mittels Umformen des Grundkörpers erhalten, insbesondere mittels Durchsetzen.

Die zumindest eine zweite Anschlussterminalanordnung erlaubt es, eine Verbindungsstelle insbesondere für einen Masseanschluss bereitzustellen, welche in bevorzugten Ausführungsvarianten ohne weitere Teile auskommt und dennoch dieselbe Bauhöhe wie die erste Anschlussterminalanordnung bereitstellt. Eine elektrische Verbindung zu der zweiten Anschlussterminalanordnung kann somit in derselben Art und Weise ausgestaltet werden, wie die elektrische Verbindung zu der ersten Anschlussterminalanordnung. Zudem wird durch die Erhebung und ggf. die entsprechende Vertiefung auf der entgegengesetzten Seite eine Wandung erhalten, welche als Sicke dient und ohne zusätzliches Material zu einer mechanischen Versteifung des Gehäuseteils führt.

Bei dem Durchsetzen wird der als Erhebung auszubildende Teil des Grundkörpers vertikal gegenüber dem verbleibenden Teil des Grundkörpers verschoben, wobei es lediglich in einem Übergangsbereich zwischen diesen Teilen zu einer Veränderung der Wandstärke des Grundkörpers kommt. Hierdurch bleiben insbesondere die Oberflächenqualitäten unverändert. Es können aber selbstverständlich auch andere Umformverfahren eingesetzt werden, wie beispielsweise das Tiefziehen.

Wird ein weiteres Anschlusspad zur Bildung der zweiten Anschlussterminalanordnung verwendet, wird dieses bevorzugt durch Schweißen, Löten oder Verkleben mit einem elektrisch leitfähigen Klebstoff mit dem Grundkörper verbunden. Bevorzugt ist das weitere Anschlusspad ähnlich oder identisch wie eines der Anschlusspads der ersten Anschlussterminalanordnung ausgestaltet. Des Weiteren ist es denkbar, nicht nur an einer Außenseite ein weiteres Anschlusspad anzuordnen, sondern auch an der gegenüberliegenden Innenseite des Gehäuseteils.

Bevorzugt ist eine Gesamthöhe der mindestens einen ersten Anschlussterminalanordnung und der mindestens einen zweiten Anschlussterminalanordnung identisch gewählt. Hierdurch befinden sich die zur elektrischen Kontaktierung vorgesehenen Bereiche alle auf gleicher Höhe mit Bezug auf die Oberfläche des Grundkörpers, so dass alle Anschlüsse mechanisch in gleicher Weise hergestellt werden können. Neben der Höhe werden bevorzugt auch andere geometrische

Parameter, insbesondere die Form und Größe der zweiten Anschlussterminalanordnung an die erste Anschlussterminalanordnung angepasst und bevorzugt identisch gewählt.

Bevorzugt ist die Gesamthöhe der Anschlussterminalanordnungen, also der zumindest einen ersten Anschlussterminalanordnung sowie der ggf. vorhanden mindestens einen zweiten Anschlussterminalanordnung, ausgehend von einer Oberfläche des Grundkörpers im Bereich von 10% bis 80% der Wandstärke des Grundkörpers gewählt. Dies erlaubt es insbesondere, die zweite Anschlussterminalanordnung als Erhebung durch Durchsetzen als Umformverfahren auszubilden.

Das Material des Grundkörpers wird nach Bedarf ausgewählt, wobei bevorzugt ein Material ausgewählt wird, welches sich gut mit den weiteren Gehäuseteilen fügen lässt. Bevorzugt ist das Material des Grundkörpers ausgewählt aus einem Metall, insbesondere Eisen, Eisen-Legierungen, Eisen-Nickel-Legierungen, Eisen- Nickel-Kobalt-Legierungen, KOVAR, Stahl, Edelstahl, Aluminium, Aluminiumlegierungen, AlSiC, Magnesium, Magnesiumlegierungen, Titan oder Titanlegierungen.

Aufgrund ihres geringen Gewichts sind dabei Leichtmetalle wie Aluminium, Magnesium und Titan sowie deren Legierungen besonders bevorzugt.

Das Material des Anschlussstifts wird bevorzugt aus einem Metall mit guter elektrischer Leitfähigkeit ausgewählt. Entsprechend ist das Material des Anschlussstifts bevorzugt ausgewählt aus Kupfer, einer Kupferlegierung, Aluminium, einer Aluminiumlegierung, Eisen, einer Eisenlegierung, einer Eisen-Nickel-Legierung, einer Eisen-Nickel-Kobalt-Legierung, KOVAR, Titan, einer Titanlegierung, Stahl, rostfreier Stahl, Edelstahl, AISIC, Magnesium oder einer Magnesiumlegierung.

Das Fixiermaterial zum Halten und Isolieren des Anschlussstifts in der Durchgangsöffnung des Grundkörpers ist aus einem Glas, einer Glaskeramik ausgewählt. Dabei wird das Fixiermaterial bevorzugt mit Bezug auf das Material des Grundkörpers und des Anschlussstifts so ausgewählt, dass eine Metall-Fixiermaterial-Durchführung ausgebildet wird.

Um eine besonders gute Abdichtung zwischen den Metallteilen, also dem Grundkörper und dem Anschlussstift der zumindest einen ersten Anschlussterminalanordnung, und dem Fixiermaterial zu erreichen, ist die Durchführung in Form einer Druckeinglasung ausgebildet. Dabei wird ein thermischer Ausdehnungskoeffizient des Grundkörpers größer gewählt als ein thermischer Ausdehnungskoeffizient des Fixiermaterials, so dass sich nach einer Temperaturbehandlung, bei der das Fixiermaterial in der Durchgangsöffnung eingeglast wird, der Grundkörper stärker zusammenzieht als das Fixiermaterial. Hierdurch werden dauerhaft Druckkräfte durch den Grundkörper auf das Fixiermaterial ausgeübt. Diese spannen das Fixiermaterial vor und sorgen für eine besonders beständige Abdichtung.

Entsprechend ist ein thermischer Ausdehnungskoeffizient des Grundkörpers größer als ein thermischer Ausdehnungskoeffizient des Fixiermaterials. Besonders bevorzugt wird bei einer Druckeinglasung der thermische Ausdehnungskoeffizient des Grundkörpers mindestens 5%, bevorzugt mindestens 10%, besonders bevorzugt mindestens 20% und am meisten bevorzugt mindestens 50% größer gewählt als der thermische Ausdehnungskoeffizient des Fixiermaterials.

Alternativ zu einer Ausführung als Druckeinglasung könnte auch eine angepasste Durchführung eingesetzt werden, bei der die Wärmeausdehnungskoeffizienten des Grundkörpers, des Fixiermaterials und des Anschlussstifts aneinander angepasst sind, was nicht zur Erfindung gehört. Unter angepasst wird hierbei verstanden, dass sich die Ausdehnungskoeffizienten im Wesentlichen um höchstens 2 * 10⁻⁶ 1/K unterscheiden, insbesondere um höchstens 1 * 10 ⁻⁶ 1/K, insbesondere im Wesentlichen gleich sind, und/oder bevorzugt im Bereich 3 bis 7 * 10 ⁻⁶ 1/K, bevorzugt 4,5 bis 5,5 * 10 ⁻⁶ 1/K liegen oder im Bereich von 9 * 10 ⁻⁶ 1/K bis 11 * 10 ⁻⁶ 1/K. Insgesamt können die Ausdehnungskoeffizienten somit im Bereich 3 bis 11 * 10 ⁻⁶ 1/K liegen. Sofern im Rahmen der vorliegenden Anmeldung auf den thermischen Ausdehnungskoeffizienten Bezug genommen wird, wird hierunter der lineare thermische Ausdehnungskoeffizient α im Bereich von 20-300°C verstanden.

Um ein Fügen des Gehäuseteils mit weiteren Gehäusebestandteilen zu vereinfachen, weist das Gehäuseteil bevorzugt einen umlaufenden Verbindungsflansch auf.

Das Gehäuseteil umfasst des Weiteren bevorzugt zumindest ein Funktionselement, welches ausgewählt ist aus einem Sicherheitsventil oder einer Befüllöffnung. Ein solches Sicherheitsventil kann beispielsweise als eine Sollbruchstelle oder ein geschwächter Abschnitt des Gehäuseteils bereitgestellt werden, wobei die Sollbruchstelle bzw. der geschwächte Abschnitt derart ausgebildet und angeordnet sind, dass diese bei einem vorgegebenen Druck gezielt versagen und ein Entweichen eines Überdrucks aus dem Inneren eines mit dem Gehäuseteil gebildeten Gehäuses ermöglichen.

Das Gehäuseteil ist bevorzugt als ein Deckel eines Gehäuses ausgebildet. Durch Fügen des Deckels mit einem Gehäusekörper kann ein Gehäuse für eine elektrische Speichereinrichtung ausgebildet werden. Diese kann eine oder mehrere elektrische Speicherzellen, beispielsweise Batteriezellen oder Kondensatorzellen umfassen.

Entsprechend ist es eine weitere Aufgabe der Erfindung, eine elektrische Speichereinrichtung, insbesondere eine Batterie oder ein Kondensator bereitzustellen, welche eines der hierin beschriebenen Gehäuse bzw. Gehäuseteile und zumindest eine Speicherzelle umfasst.

Die Erfindung soll nachfolgend anhand der Figuren und ohne Beschränkung hierauf eingehender beschrieben werden.

Es zeigen:
Fig. 1: eine Ansicht auf eine Unterseite eines als Deckel ausgestalteten Gehäuseteils,
Fig. 2: eine Schnittansicht des Gehäuseteils entlang der in Figur 1 markierten Schnittlinie,
Fig. 3: eine vergrößerte Ansicht einer ersten Anschlussterminalanordnung des Deckelteils,
Fig. 4 ein zweites Beispiel für eine erste Anschlussterminalanordnung,
Fig. 5 ein drittes Beispiel für eine erste Anschlussterminalanordnung,
Fig. 6 ein viertes Beispiel für eine erste Anschlussterminalanordnung,
Fig. 7 ein fünftes Beispiel für eine erste Anschlussterminalanordnung,
Fig. 8 eine erste Variante von Fig. 4,
Fig. 9 eine zweite Variante von Fig. 4 und
Fig. 10 eine dritte Variante von Fig. 4.

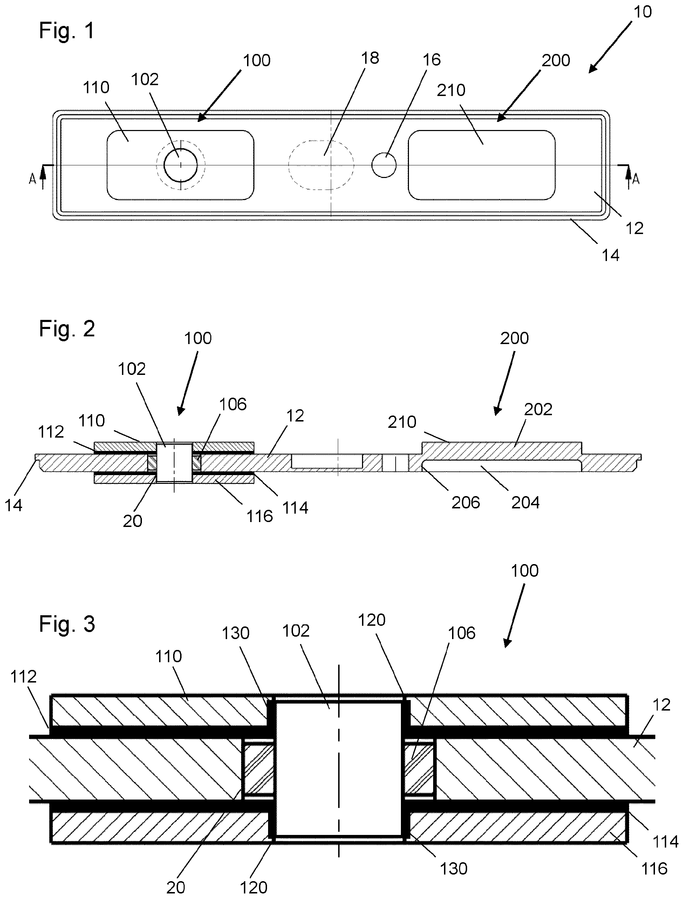

**In** Figur 1 ist ein Ausführungsbeispiel eines als Deckel ausgestalteten Gehäuseteils 10 in einer Ansicht von unten dargestellt. **In** diesem Ausführungsbeispiel weist das Gehäuseteil 10 einen Grundkörper 12 mit einer ersten Anschlussterminalanordnung 100 und einer zweiten Anschlussterminalanordnung 200 auf. Wird das Gehäuseteil 10 mit einer oder mehreren elektrischen Speicherzellen, beispielsweise einer Batteriezelle oder eine Kondensatorzelle, verbunden, kann die erste Anschlussterminalanordnung 100 beispielsweise als positives Terminal und die zweite Anschlussterminalanordnung 200 beispielsweise als negatives Terminal dienen.

Das Gehäuseteil 10 kann zusätzlich zu den Anschlussterminalanordnungen 100, 200 noch weitere Funktionselemente aufweisen. **In** dem in Figur 1 dargestellten Beispiel ist hierzu eine Sicherheitseinrichtung in Form eines Sicherheitsventils 18 sowie eine Befüllöffnung 16 vorgesehen. Das Sicherheitsventil 18 kann beispielsweise als eine Sollbruchstelle im Gehäuseteil 10 ausgestaltet sein, wobei das Sicherheitsventil derart eingerichtet ist, dass es bei einem definierten Druck öffnet. Durch die Befüllöffnung 16 hindurch kann nach Zusammenfügen aller Teile des Gehäuses das Innere mit einem flüssigen oder gasförmigen Medium befüllt werden, beispielsweise mit einem Elektrolyten. Nach dem Befüllen wird die Befüllöffnung 16 üblicherweise verschlossen.

Zur Verbindung mit weiteren Gehäuseteilen ist in dem in Figur 1 dargestellten Beispiel ein umlaufender Verbindungsflansch 14 vorgesehen. Dieser kann beispielsweise als ein Schweißflansch ausgebildet sein.

Figur 2 zeigt das Gehäuseteil der Figur 1 in einer Schnittdarstellung von der Seite entlang der in Figur 1 mit A-A markierten Schnittlinie. **In** dieser Schnittdarstellung ist jeweils der Aufbau der ersten Anschlussterminalanordnung 100 und der zweiten Anschlussterminalanordnung 200 gut zu erkennen.

Die erste Anschlussterminalanordnung 100, die in Figur 3 vergrößert dargestellt ist, umfasst einen Anschlussstift 102, der in eine Durchgangsöffnung 20 des Grundkörpers 12 eingesetzt ist und über ein Fixiermaterial 106 gehalten wird. Dabei isoliert das Fixiermaterial 106 den Anschlussstift 102 auch elektrisch gegen den Grundkörper 12. Der Anschlussstift 102 ragt in dem dargestellten Beispiel sowohl an einer Oberseite als auch an einer Unterseite über den Grundkörper 102 bzw. die Durchgangsöffnung 20 hinaus.

Auf der Oberseite des Grundkörpers 12 ist ein Anschlusspad 110 angeordnet, welches mit einem Isoliermaterial 112, beispielsweise einem Klebstoff, an dem Grundkörper 12 befestigt ist. Das Anschlusspad 110 weist eine Öffnung 120 auf, in die der Anschlussstift 102 eingreift. Dazu weist die Öffnung 120 im Wesentlichen dieselbe Form auf wie der Querschnitt des Anschlussstifts 102, wobei die Öffnung 120 bevorzugt etwas größer ausgeführt ist, so dass der Anschlussstift 102 auch bei eventuell auftretenden Fertigungstoleranzen in diese Öffnung 120 eingreifen kann. Der Anschlussstift 102 berührt das Anschlusspad 110 oder es besteht zwischen diesen nur ein geringer Spalt, so dass durch eine Schweißverbindung 130 zwischen beiden eine elektrische Verbindung hergestellt werden kann. Eine derartige Schweißverbindung 130 wird bevorzugt entlang einer Kontur der Öffnung 120 ausgebildet. Das Anschlusspad 110 befindet sich nach dem Zusammensetzen des Gehäuses außen, so dass es als Anschlussbereich für eine elektrische Kontaktierung dienen kann.

In dem in den Figuren 2 und 3 dargestellten Beispiel ist an der Unterseite des Grundkörpers 12 ein inneres Anschlusspad 116 angeordnet, welches über ein inneres Isolationsmaterial 114 an der Unterseite des Grundkörpers 12 befestigt ist. Auch das innere Anschlusspad 116 weist eine Öffnung 120 auf, in die der Anschlussstift 102 eingreift. Auch ist der Anschlussstift 102 entlang der Kontur der Öffnung 120 mit dem inneren Anschlusspad 116 elektrisch Verbunden, beispielsweise durch eine Schweißverbindung 130. Das innere Anschlusspad 116 befindet sich nach dem Zusammensetzen des Gehäuses in dessen Inneren, so dass es als Anschlussbereich für im Inneren des Gehäuses aufgenommene Speicherzellen dienen kann. Beispielsweise können Anschlussfahnen von Speicherzellen mit dem Anschlusspad verbunden werden, insbesondere können diese verschweißt werden.

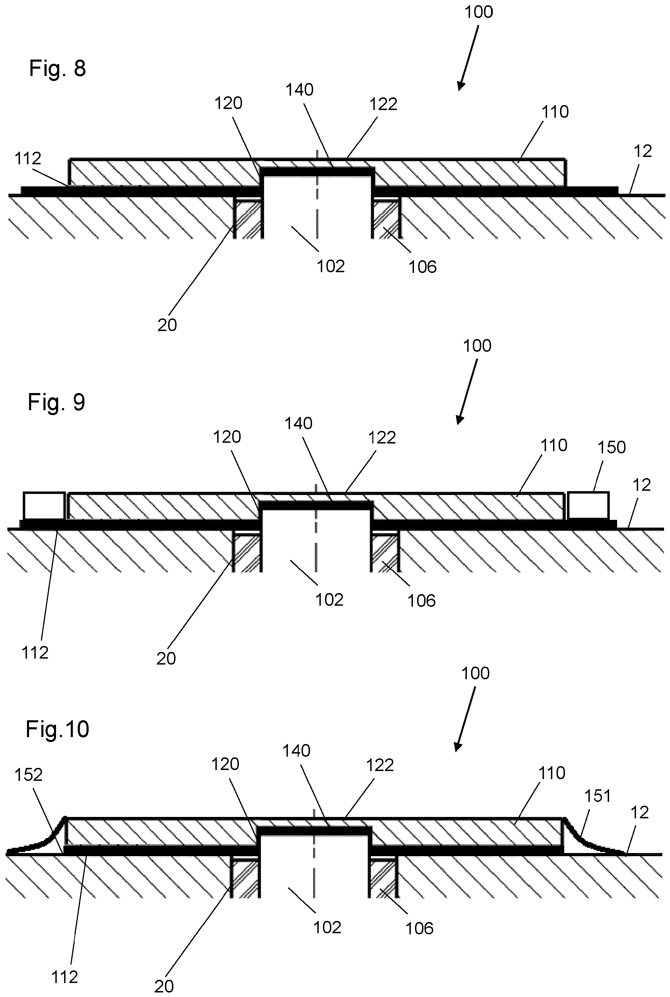

Die Abmessungen des Isolationsmaterials 112, 114 sind in dem in Figuren 1 bis 3 dargestellten Beispiel an die Abmessungen der Anschlusspads 110, 116 angepasst, so dass das Isolationsmaterial 112, 114 vollständig überdeckt ist. Alternativ ist es beispielsweise zum Vergrößern einer Kriechstrecke möglich, die Abmessungen des Isolationsmaterials 112, 114 zu vergrößern, so dass ein Teil des Isolationsmaterials 112, 114 über die Anschlusspads 110, 116 herausragt, was exemplarisch in den Figuren 8 und 9 schematisch dargestellt ist.

In der Figur 2 ist ebenfalls die zweite Anschlussterminalanordnung 200 dargestellt. Diese weist auf einer Außenseite des Gehäuseteils 10 eine Erhebung 202 auf, durch die ein Anschlussbereich 210 bereitgestellt wird. Auf der entgegengesetzten inneren Seite weist die zweite Anschlussterminalanordnung 200 eine entsprechende Vertiefung 204 auf. Die dabei gebildete Wandung 206 der Vertiefung trägt wie eine Sicke zu einer Versteifung des Gehäuseteils 10 bei. Die Erhebung 202 wird bevorzugt derart ausgestaltet, dass die Höhe der zweiten Anschlussterminalanordnung 200 der Gesamthöhe der ersten Anschlussterminalanordnung 100, also der Dicke des Isolationsmaterials 112 und der Dicke des Anschlusspads 110 entspricht. Ferner werden die Abmessungen, also die Länge und die Breite, des Anschlussbereichs 210 bevorzugt so gewählt, dass diese den Abmessungen des Anschlusspads 110 entsprechen. Vorteilhafter Weise weisen dann die erste Anschlussterminalanordnung 100 und die zweite Anschlussterminalanordnung 200 dieselbe Höhe gegenüber dem Grundkörper 12 und dieselben Abmessungen auf, so dass eine elektrische Kontaktierung erleichtert wird.

Die zweite Anschlussterminalanordnung 200 wird bevorzugt über ein Umformen des Materials des Grundkörpers 12 erhalten. Bevorzugt erfolgt das Umformen mittels Durchsetzen, bei dem der Bereich der Erhebung 202 vertikal verschoben wird. Hierbei kommt es nur in einem Übergangsbereich zu einer Veränderung der Materialstärke des Grundkörpers 12, so dass im Bereich der Erhebung 202 die Materialstärke gleich der Materialstärke des Grundkörpers 12 außerhalb der zweiten Anschlussterminalanordnung 200 ist.

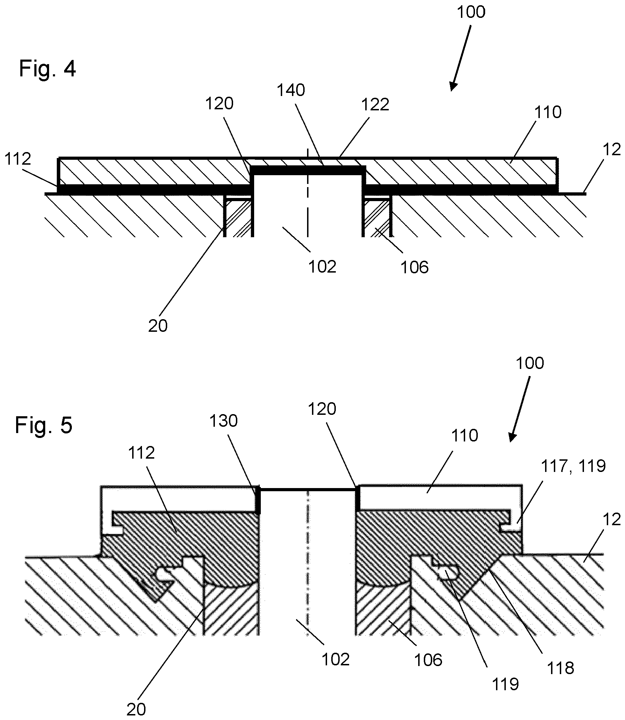

Figur 4 zeigt ein zweites Ausführungsbeispiel der ersten Anschlussterminalanordnung 100. Wie mit Bezug zu den Figuren 1 bis 3 bereits beschrieben umfasst die erste Anschlussterminalanordnung 100 eine elektrische Durchführung, bei der der Anschlussstift 102 über das Fixiermaterial 106 in der Durchgangsöffnung 20 des Grundkörpers 12 gehalten wird. Das Fixiermaterial 106 dichtet zudem gegen den Anschlussstift 102 und die Wandung der Durchgangsöffnung 20 ab, so dass die Durchführung dicht ist. Bevorzugt ist die Durchführung hermetisch dicht ausgeführt.

Im Gegensatz zu dem in den Figuren 1 bis 3 dargestellten ersten Ausführungsbeispiel weist das Anschlusspad 110 eine als Sackloch ausgestaltete Öffnung 120 auf, in die ein über die Durchgangsöffnung 20 hervorstehender Teil des Anschlussstifts 102 eingreift. Zur elektrischen Verbindung zwischen dem Anschlussstift 102 und dem Anschlusspad 110 ist im Bereich des Sacklochs ein leitfähiger Klebstoff 140 eingebracht. In den übrigen Bereichen zwischen dem Anschlusspad 102 und dem Grundkörper 102 wird ein elektrisch isolierender Klebstoff als isolierendes Material 112 eingesetzt, um das Anschlusspad 102 an dem Grundkörper 12 zu fixieren.

Wie in der Darstellung der Figur 4 ersichtlich ergibt sich hierbei keine Nahtstelle im Bereich des Anschlussstifts 102 und einer Oberfläche des Anschlusspads 110, so dass eine durchgehende ebene Anschlussfläche bereitgestellt wird. Der Anschlussstift 102 sowie das Fixiermaterial 106 werden vollständig von dem Anschlusspad 110 überdeckt, wobei im Bereich der als Sackloch ausgebildeten Öffnung 120 das Anschlusspad 110 einen abgedünnten Bereich 140 mit verringerter Wandstärke aufweist.

Figuren 5, 6 und 7 zeigen drei weitere Ausführungsbeispiele der ersten Anschlussterminalanordnung 100. Der Grundkörper 12 und die durch den Anschlussstift 102 und das Fixiermaterial 106 gebildete elektrische Durchführung sind wie mit Bezug zu den vorangegangenen Ausführungsformen beschrieben ausgestaltet. Der über die Durchgangsöffnung 20 im Grundkörper 12 hervorstehende Teil des Anschlussstifts 12 ist wie mit Bezug zur ersten Ausführungsform der Figuren 1 bis 3 durch eine Schweißverbindung 130 elektrisch mit dem Anschlusspad 110 verbunden.

Bei der ersten Anschlussterminalanordnung 100 der Figuren 5, 6 und 7 wird jedoch abweichend zum Verbinden des Anschlusspads 110 und dem Grundkörper 12 ein Gussmaterial als Isolationsmaterial 112 eingesetzt, beispielsweise ein thermoplastischer oder duroplastischer Kunststoff. Damit sich das Isolationsmaterial 112 gut mit dem Grundkörper 12 und dem Anschlusspad 110 verbinden kann, sind jeweils Hinterschneidungen 119 vorgesehen.

**In** dem in Figur 5 dargestellten dritten Ausführungsbeispiel ist im Grundkörper 12 eine um die Öffnung 20 umlaufende Vertiefung 118 angeordnet, welche eine Hinterschneidung 119 in Form einer umlaufenden hervorstehenden Erhebung innerhalb der Vertiefung 118 aufweist. Am Anschlusspad 110 wird durch Umfalten des Rands ein Kragen 117 ausgebildet, der eine umlaufende Hinterschneidung 119 darstellt.

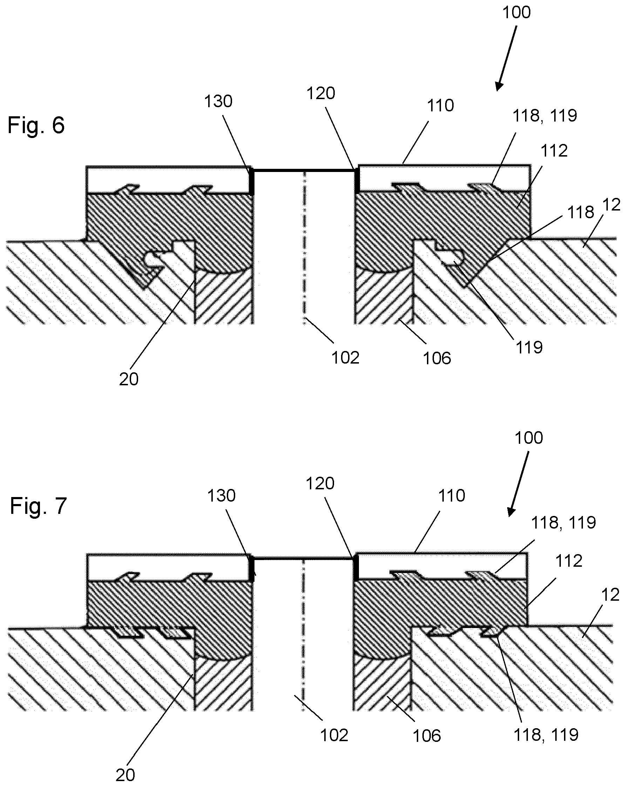

In dem in Figur 6 dargestellten vierten Ausführungsbeispiel ist im Grundkörper 12 wieder eine um die Öffnung 20 umlaufende Vertiefung 118 angeordnet, welche eine Hinterschneidung 119 in Form einer umlaufenden hervorstehenden Erhebung innerhalb der Vertiefung 118 aufweist. Am Anschlusspad 110 sind mehrere Vertiefungen in Form schräger Rillen angeordnet, welche durch ihre Ausführung ebenfalls eine Hinterschneidung 119 ausbilden.

In dem in Figur 7 dargestellten fünften Ausführungsbeispiel sind sowohl am Grundkörper 12 als auch an dem Anschlusspad 110 jeweils Vertiefungen 118 in Form schräger Rillen ausgebildet, die jeweils eine Hinterschneidung 119 als Halt für das Isolationsmaterial 112 bereitstellen.

Anstelle oder zusätzlich zu den in den Figuren 5 bis 7 dargestellten Rillen und Vertiefungen können die dem Isolationsmaterial 112 zugewandten Oberflächen des Anschlusspads 110 und des Grundkörpers 12 mit einer Mikrostrukturierung versehen sein. Hierdurch werden viele Vertiefungen und/oder Rillen angeordnet, welche dem Isolationsmaterial 112 Halt bieten.

Die Figuren 8 bis 10 zeigen Maßnahmen zur Vergrößerung der Kriechstrecke am Rande eines Anschlusspads 110. Diese sind hier exemplarisch für das zweite Beispiel einer ersten Anschlussterminalanordnung 100 dargestellt (vgl. Figur 4). Selbstverständlich sind sie nicht auf Anschlusspad-Ausführungsformen mit einer als Sackloch ausgestalteten Öffnung 120 beschränkt, sondern können auch mit anderen Beispielen einer ersten Anschlussterminalanordnung, insbesondere mit Ausführungsformen entsprechend der Figuren 1 bis 3, kombiniert sein.

In der in Figur 8 dargestellten ersten Variante zur Verlängerung der Kriechstrecke ist die Außenabmessung des Isoliermaterials 112 größer gewählt als die Außenabmessung des Anschlusspads 110, so dass ein Teil des Isoliermaterials 112 über das Anschlusspad 110 herausragt.

Alternativ oder zusätzlich zu einem herausragenden Teil des Isoliermaterials 112 kann ein weiteres Isolierelement 150 im Randbereich des Anschlusspads 110 vorgesehen sein, dass das Anschlusspad 110 seitlich umgibt. In der in Figur 9 dargestellten zweiten Variante zur Verlängerung der Kriechstrecke ist das weiteres Isolierelement 150 seitlich neben dem Anschlusspad 110 auf dem herausragenden Isoliermaterial 112 befestigt, beispielsweise geklebt.

Figur 10 zeigt eine dritte Variante zur Verlängerung der Kriechstrecke bei einer Ausführungsform, bei der das Isoliermaterial 112 vollständig durch das Anschlusspad 110 überdeckt ist. Um die Kriechstrecke zu verlängern, ist eine isolierende Kriechstreckenverlängerung 151 vorgesehen, die die Fuge 152 zwischen Grundkörper 12 und Anschlusspad 110 abdeckt. Für die Bereitstellung der Kriechstreckenverlängerung 151 kann beispielsweise nach der Befestigung des Anschlusspads 110 an dem Grundkörper 12 in einem zusätzlichen Arbeitsschritt eine "Kleberraupe" aus isolierendem Material um das Anschlusspad 110 herum platziert werden. Alternativ kann das Isoliermaterial zumindest partiell unter dem Anschlusspad 110 dicker ausgebildet sein und/oder im Randbereich unterhalb des Anschlusspads 110 zusätzlich z.B. eine Kleberraupe vorgesehen sein, so dass beim Befestigen des Anschlusspads 110 auf dem Grundkörper 12 Material randlich herausgedrückt wird und dadurch die Kriechstreckenverlängerung an der Fuge 152 ausbildet.

Die Ansprüche sind nicht auf die hierin beschriebenen Ausführungsbeispiele beschränkt. Insbesondere ist eine Vielzahl von Abwandlungen möglich, bei denen einzelne Merkmale der hierin beschriebenen Ausführungsbeispiele miteinander kombiniert werden.

### Bezugszeichenliste

- 10: Gehäuseteil
- 12: Grundkörper
- 14: Verbindungsflansch
- 16: Befüllöffnung
- 18: Sicherheitseinrichtung
- 20: Durchgangsöffnung
- A: Schnittlinie

- 100: erste Anschlussterminalanordnung
- 102: Anschlussstift
- 104: Durchgangsöffnung
- 106: Fixiermaterial
- 110: Anschlusspad
- 112: Isolationsmaterial
- 114: inneres Isolationsmaterial
- 116: inneres Anschlusspad
- 117: Kragen
- 118: Vertiefung
- 119: Hinterschnitt
- 120: Öffnung
- 122: dünner Bereich
- 130: Schweißverbindung
- 140: leitfähiger Klebstoff
- 150: weiteres Isolierelement
- 151: Kriechstreckenverlängerung
- 152: Fuge

- 200: zweite Anschlussterminalanordnung
- 202: Erhebung
- 204: Durchsetzung
- 206: Wandung Durchsetzung
- 210: Anschlussbereich

## Patentansprüche

1. Gehäuseteil (10) für eine elektrische Speichereinrichtung, insbesondere eine Batterie oder einen Kondensator, umfassend einen Grundkörper (12) und zumindest eine erste Anschlussterminalanordnung (100) mit einem Anschlussstift (102), welcher durch eine Durchgangsöffnung (20) des Grundkörpers (12) hindurchgeführt ist und über ein Fixiermaterial (106) elektrisch isoliert in der Durchgangsöffnung (20) fixiert ist, wobei der Anschlussstift (102) zumindest an einer Seite der Durchgangsöffnung (20) über diese hervorsteht, **dadurch gekennzeichnet, dass** zumindest an einer Seite der Durchgangsöffnung (20) ein Anschlusspad (110, 116) vorgesehen ist, welches eine Öffnung (120) aufweist, welche als Durchgangsöffnung oder als Sackloch ausgebildet ist, wobei der hervorstehende Teil des Anschlussstifts (102) in die Öffnung (120) eingreift und im Bereich dieser Öffnung (120) elektrisch mit dem zumindest einen Anschlusspad (110, 116) verbunden ist und wobei das zumindest eine Anschlusspad (110, 116) elektrisch isolierend mit einem Isolationsmaterial (112, 114) an dem Grundkörper (12) befestigt ist, wobei es sich bei dem Isolationsmaterial (112, 114) um einen elektrisch isolierenden Klebstoff oder um ein elektrisch isolierendes Gussmaterial handelt, wobei das Fixiermaterial (106) ausgewählt ist aus einem Glas oder einer Glaskeramik und die Verbindung zwischen dem Fixiermaterial (106) und dem Anschlussstift (102) sowie zwischen dem Fixiermaterial (106) und der Wandung der Durchgangsöffnung (20) hermetisch dicht ist,
wobei ein erster Wärmeausdehnungskoeffizient des Grundkörpers (12) größer ist als ein zweiter Wärmeausdehnungskoeffizient des Fixiermaterials (106).

2. Gehäuseteil (10) nach Anspruch 1, **dadurch gekennzeichnet, dass** der Anschlussstift (102) an beiden Seiten der Durchgangsöffnung (20) über diese hervorsteht und auf beiden Seiten der Durchgangsöffnung (20) Anschlusspads (110, 116) angeordnet sind, welche jeweils eine Öffnung (120) aufweisen, wobei jeweils der hervorstehende Teil des Anschlussstifts (102) in die jeweilige Öffnung (120) eingreift und im Bereich dieser Öffnung (120) elektrisch mit dem jeweiligen Anschlusspad (110, 116) verbunden ist.

3. Gehäuseteil (10) nach Anspruch 1 oder 2, **dadurch gekennzeichnet, dass** das zumindest eine Anschlusspad (110, 116) vollflächig unter Verwendung des Klebstoffs oder unter Verwendung des Gussmaterials als Isolationsmaterial (112, 114) elektrisch isolierend an dem Grundkörper (12) befestigt ist
und/oder
dass das Isolationsmaterial (112, 114) das Fixiermaterial (106) vollständig überdeckt.

4. Gehäuseteil (10) nach einem der Ansprüche 1 bis 3, **dadurch gekennzeichnet, dass** das zumindest eine Anschlusspad (110, 116) derart angeordnet und eingerichtet ist, dass der Anschlussstift (102) nicht über die Öffnung (120) des zumindest einen Anschlusspads (110, 116) hinausragt.

5. Gehäuseteil (10) nach einem der Ansprüche 1 bis 4, **dadurch gekennzeichnet, dass** eine Form der Öffnung (120) des zumindest einen Anschlusspads (110, 116) einer Querschnittsform des Anschlussstifts (102) entspricht, wobei die Größe der Öffnung (120) bevorzugt 0,02 mm bis 0,1 mm größer gewählt ist, als die entsprechende Größe des Anschlussstifts (102).

6. Gehäuseteil (10) nach einem der Ansprüche 1 bis 5, **dadurch gekennzeichnet, dass** zur Verbindung des Anschlussstifts (102) und dem zumindest einen Anschlusspad (110, 116) eine leitfähige Klebeverbindung, eine Schweißverbindung oder eine Lötverbindung eingesetzt wird, welche im Fall einer als Durchgangsöffnung ausgebildeten Öffnung (120) bevorzugt entlang der Kontur der Öffnung (120) des zumindest einen Anschlusspads (110, 116) erfolgt oder im Fall einer als Sackloch ausgebildeten Öffnung (120) bevorzugt vollflächig erfolgt.

7. Gehäuseteil (10) nach einem der Ansprüche 1 bis 6, **dadurch gekennzeichnet, dass** das zumindest eine Anschlusspad (110, 116) eine Form aufweist, welche ausgewählt ist aus runden Formen wie Kreisen, oder Ellipsen oder ausgewählt ist aus polygonalen Formen wie Rechtecken, Quadraten, Dreiecken, oder Sechsecken, jeweils gegebenenfalls mit abgerundeten Ecken.

8. Gehäuseteil (10) nach einem der Ansprüche 1 bis 7, **dadurch gekennzeichnet, dass** der Grundkörper (12) zumindest in einem Verbindungsbereich, in dem Grundkörper (12) mit dem zumindest einem Anschlusspad (110, 116) verbunden wird, und/oder das zumindest eine Anschlusspad (110, 116) an der zum Grundkörper (12) weisenden Seite eine Mikrostrukturierung aufweist.

9. Gehäuseteil (10) nach einem der Ansprüche 1 bis 8, **dadurch gekennzeichnet, dass** der Grundkörper (12) und/oder das zumindest eine Anschlusspad (110, 116) Vertiefungen (118) oder Strukturen mit zumindest einer Hinterschneidung (119) aufweist, in die das Isolationsmaterial (112, 114) zur Verbindung des Grundkörpers (12) mit dem zumindest einen Anschlusspad (110, 116) eingreift.

10. Gehäuseteil (10) nach einem der Ansprüche 1 bis 9, **dadurch gekennzeichnet, dass** die Anschlusspads (110, 116) aus einem Material ausgewählt aus Aluminium, Aluminiumlegierungen, Kupfer, Kupferlegierungen, insbesondere Messing und Bronze, Silber, Gold, Platin und Silberlegierungen. insbesondere Silber-Nickel und Silber-Zinn-Oxid bestehen.

11. Gehäuseteil (10) nach einem der Ansprüche 1 bis 10, **dadurch gekennzeichnet, dass** das Gehäuseteil (10) ferner mindestens eine zweite Anschlussterminalanordnung (200) umfasst, bei der ein Anschlussbereich (210) durch eine Erhebung (202) im Grundkörper (12) gebildet ist oder durch ein weiteres Anschlusspad gebildet ist, welches elektrisch leitfähig mit dem Grundkörper (12) verbunden ist, wobei bevorzugt die Erhebung (202) mittels Umformen des Grundkörpers (12) erhalten wurde, insbesondere mittels Durchsetzen.

12. Gehäuseteil (10) nach einem der Ansprüche 1 bis 11, **dadurch gekennzeichnet, dass** eine Gesamthöhe der mindestens einen ersten Anschlussterminalanordnung (100) und der mindestens einen zweiten Anschlussterminalanordnung (200) identisch gewählt ist, wobei bevorzugt die Gesamthöhe der Anschlussterminalanordnungen (100, 200) ausgehend von einer Oberfläche des Grundkörpers (12) im Bereich von 10% bis 80% der Wandstärke des Grundkörpers (12) gewählt ist.

13. Gehäuseteil (10) nach einem der vorherigen Ansprüche, **dadurch gekennzeichnet, dass** das Material des Grundkörpers (12) ausgewählt ist aus einem Metall, insbesondere Eisen, Eisen-Legierungen, Eisen-Nickel-Legierungen, Eisen- Nickel-Kobalt-Legierungen, KOVAR, Stahl, Edelstahl, Aluminium, Aluminiumlegierungen, AlSiC, Magnesium, Magnesiumlegierungen, Titan oder Titanlegierungen,
und/oder
dass das Material des Anschlussstifts (102) ausgewählt ist aus Kupfer, einer Kupferlegierung, Aluminium, einer Aluminiumlegierung Eisen, einer Eisenlegierung, einer Eisen-Nickel-Legierung, einer Eisen-Nickel-Kobald-Legierung, KOVAR, Titan, einer Titanlegierung, Stahl, rostfreier Stahl, Edelstahl, AISIC, Magnesium, einer Magnesiumlegierung.

14. Gehäuseteil (10) nach einem der vorherigen Ansprüche, **dadurch gekennzeichnet, dass** der erste Wärmeausdehnungskoeffizient des Grundkörpers (12) mindestens 5% größer ist als der zweite Wärmeausdehnungskoeffizient des Fixiermaterials (106).

15. Gehäuseteil (10) nach einem der vorherigen Ansprüche, **dadurch gekennzeichnet, dass** das Gehäuseteil (10) als ein Deckel eines Gehäuses ausgebildet ist und bevorzugt einen umlaufenden Verbindungsflansch (14) zur Verbindung mit einem weiteren Gehäuseteil aufweist.

16. Gehäuseteil (10) nach einem der vorherigen Ansprüche, **dadurch kennzeichnet, dass** die mindestens eine erste Anschlussterminalanordnung (100) zusammen mit dem Grundkörper (12) im Bereich der Durchgangsöffnung (20) eine Biegefestigkeit aufweist, welche mindestens doppelt so hoch ist wie die Biegefestigkeit des Grundkörpers (12) ohne die erste Anschlussterminalanordnung (100).

17. Elektrische Speichereinrichtung, insbesondere eine Batterie oder ein Kondensator, umfassend ein Gehäuse und zumindest eine Speicherzelle, **dadurch gekennzeichnet, dass** das Gehäuse ein Gehäuseteil (10) gemäß einem der Ansprüche 1 bis 16 umfasst.

## Claims

1. Housing part (10) for an electrical storage installation, in particular a battery or a capacitor, comprising a main body (12) and at least one first connector terminal assembly (100) having a connector pin (102) which is routed through a through opening (20) of the main body (12) and by way of a fixing material (106) is fixed so as to be electrically isolated in the through opening (20), wherein the connector pin (102) on at least one side of the through opening (20) projects beyond the latter, **characterized in that** provided on at least one side of the through opening (20) is a terminal pad (110, 116) which has an opening (120) that is configured as a through opening or as a blind bore, wherein the projecting part of the connector pin (102) engages in the opening (120) and in the region of this opening (120) is electrically connected to the at least one terminal pad (110, 116), and wherein the at least one terminal pad (110, 116) by way of an insulation material (112, 114) is fastened so as to be electrically isolated on the main body (12), wherein the insulation material (112, 114) is an electrically isolating adhesive, or an electrically isolating potting material, wherein the fixing material (106) is selected from glass, or glass ceramics, and the connection between the fixing material (106) and the connector pin (102) and between the fixing material (106) and the wall of the through opening (20), is hermetically tight,
wherein a first thermal expansion coefficient of the main body (12) is greater than a second thermal expansion coefficient of the fixing material (106).

2. Housing part (10) according to Claim 1, **characterized in that** the connector pin (102) on both sides of the through opening (20) projects beyond the latter, and disposed on both sides of the through opening (20) are terminal pads (110, 116) which have in each case an opening (120), wherein the projecting part of the connector pin (102) engages in each case in the respective opening (120) and in the region of this opening (120) is electrically connected to the respective terminal pad (110, 116).

3. Housing part (10) according to Claim 1 or **2, characterized in that** the at least one terminal pad (110, 116), while using the adhesive or while using the potting material as an insulation material (112, 114), is fastened across the entire area so as to be electrically isolated on the main body (12),
and/or
**in that** the insulation material (112, 114) completely covers the fixing material (106).

4. Housing part (10) according to one of Claims 1 to 3, **characterized in that** the at least one terminal pad (110, 116) is disposed and specified in such a manner that the connector pin (102) does not protrude beyond the opening (120) of the at least one terminal pad (110, 116).

5. Housing part (10) according to one of Claims 1 to 4, **characterized in that** a shape of the opening (120) of the at least one terminal pad (110, 116) corresponds to a cross-sectional shape of the connector pin (102), wherein the size of the opening (120) is preferably chosen so as to be larger by 0.02 mm to 0.1 mm than the corresponding size of the connector pin (102).

6. Housing part (10) according to one of Claims 1 to 5, **characterized in that** a conductive adhesive connection, a welded connection or a soldered/brazed connection is used for connecting the connector pin (102) and the at least one terminal pad (110, 116), said conductive adhesive connection, welded connection or soldered/brazed connection in the case of an opening (120) configured as a through opening preferably being established along the contour of the opening (120) of the at least one terminal pad (110, 116), or in the case of an opening (120) configured as a blind bore preferably being established across the entire area.

7. Housing part (10) according to one of Claims 1 to 6, **characterized in that** the at least one terminal pad (110, 116) has a shape that is selected from round shapes such as circles or ellipses, or selected from polygonal shapes such as rectangles, squares, triangles or hexagons, in each case optionally having radiused corners.

8. Housing part (10) according to one of Claims 1 to 7, **characterized in that** the main body (12), at least in a connection region in which main body (12) is connected to the at least one terminal pad (110, 116), and/or the at least one terminal pad (110, 116) on the side facing the main body (12), has a microstructure.

9. Housing part (10) according to one of Claims 1 to 8, **characterized in that** the main body (12) and/or the at least one terminal pad (110, 116) have/has depressions (118) or structures with at least one undercut (119) into which the insulation material (112, 114) engages in order to connect the main body (12) to the at least one terminal pad (110, 116).

10. Housing part (10) according to one of Claims 1 to 9, **characterized in that** the terminal pads (110, 116) are composed of a material selected from aluminium, aluminium alloys, copper, copper alloys, in particular brass and bronze, silver, gold, platinum and silver alloys, in particular silver-nickel and silver-tin oxide.

11. Housing part (10) according to one of Claims 1 to 10, **characterized in that** the housing part (10) furthermore comprises at least one second connector terminal assembly (200) in which a connector region (210) is formed by an elevation (202) in the main body (12), or is formed by a further terminal pad which is connected in an electrically conductive manner to the main body (12), wherein the elevation (202) has preferably been obtained by forming the main body (12), in particular by shear forming.

12. Housing part (10) according to one of Claims 1 to 11, **characterized in that** an overall height of the at least one first connector terminal assembly (100) and of the at least one second connector terminal assembly (200) are chosen so as to be identical, wherein the overall height of the connector terminal assemblies (100, 200), proceeding from a surface of the main body (12), is chosen so as to be in the range from 10% to 80% of the wall thickness of the main body (12).

13. Housing part (10) according to one of the preceding claims, **characterized in that** the material of the main body (12) is selected from a metal, in particular iron, iron alloys, iron-nickel alloys, iron-nickel-cobalt alloys, KOVAR, steel, stainless steel, aluminium, aluminium alloys, AlSiC, magnesium, magnesium alloys, titanium or titanium alloys,
and/or
**in that** the material of the connector pin (102) is selected from copper, a copper alloy, aluminium, an aluminium alloy, iron, an iron alloy, an iron-nickel alloy, an iron-nickel-cobalt alloy, KOVAR, titanium, a titanium alloy, steel, high-grade steel, stainless steel, AlSiC, magnesium, a magnesium alloy.

14. Housing part (10) according to one of the preceding claims, **characterized in that** the first thermal expansion coefficient of the main body (12) is at least 5% greater than the second thermal expansion coefficient of the fixing material (106).

15. Housing part (10) according to one of the preceding claims, **characterized in that** the housing part (10) is configured as a lid of a housing, and preferably has an encircling connection flange (14) for connecting to a further housing part.

16. Housing part (10) according to one of the preceding claims, **characterized in that** the at least one first connector terminal assembly (100), conjointly with the main body (12), in the region of the through opening (20) has a flexural strength which is at least double the flexural strength of the main body (12) without the first connector terminal assembly (100).

17. Electrical storage device, in particular a battery or a capacitor, comprising a housing and at least one storage cell, **characterized in that** the housing comprises a housing part (10) according to one of Claims 1 to 16.

## Revendications

1. Partie de boîtier (10) pour un dispositif de stockage électrique, en particulier une batterie ou un condensateur, comprenant un corps de base (12) et au moins un premier agencement de bornes de connexion (100) pourvu d'une broche de connexion (102) qui passe à travers une ouverture de passage (20) du corps de base (12) et est fixée dans l'ouverture de passage (20) de manière électriquement isolante par l'intermédiaire d'un matériau de fixation (106), dans laquelle la broche de connexion (102) fait saillie à partir de l'ouverture de passage (20) sur au moins un côté, **caractérisée en ce qu'**une pastille de connexion (110, 116) est prévue sur au moins un côté de l'ouverture de passage (20) et présente une ouverture (120) qui est réalisée sous forme d'ouverture de passage ou de trou borgne, dans laquelle la partie en saillie de la broche de connexion (102) vient en prise avec l'ouverture (120) et est reliée électriquement au niveau de cette ouverture (120) à ladite au moins une pastille de connexion (110, 116), et dans laquelle ladite au moins une pastille de connexion (110, 116) est fixée au corps de base (12) de manière électriquement isolante par l'intermédiaire d'un matériau isolant (112, 114), dans laquelle le matériau isolant (112, 114) est un adhésif électriquement isolant ou un matériau coulé électriquement isolant, dans laquelle le matériau de fixation (106) est sélectionné parmi le verre ou une vitrocéramique, et la liaison entre le matériau de fixation (106) et la broche de connexion (102) ainsi qu'entre le matériau de fixation (106) et la paroi de l'ouverture de passage (20) est hermétiquement étanche,
dans laquelle un premier coefficient de dilatation thermique du corps de base (12) est supérieur à un deuxième coefficient de dilatation thermique du matériau de fixation (106).

2. Partie de boîtier (10) selon la revendication 1, **caractérisée en ce que** la broche de connexion (102) fait saillie des deux côtés de l'ouverture de passage (20), et des pastilles de connexion (110, 116) sont disposées des deux côtés de l'ouverture de passage (20) et présentent une ouverture (120) respectivement, dans laquelle respectivement la partie en saillie de la broche de connexion (102) vient en prise avec l'ouverture respective (120) et est reliée électriquement à la pastille de connexion (110, 116) respective au niveau de cette ouverture (120).

3. Partie de boîtier (10) selon la revendication 1 ou 2, **caractérisée en ce que** ladite au moins une pastille de connexion (110, 116) est fixée de manière électriquement isolante au corps de base (12) sur toute la surface à l'aide de l'adhésif ou à l'aide du matériau coulé comme matériau isolant (112, 114),
et/ou
**en ce que** le matériau isolant (112, 114) recouvre complètement le matériau de fixation (106).

4. Partie de boîtier (10) selon l'une quelconque des revendications 1 à 3, **caractérisée en ce que** ladite au moins une pastille de connexion (110, 116) est disposée et conçue de telle sorte que la broche de connexion (102) ne fait pas saillie à partir de l'ouverture (120) de ladite au moins une pastille de connexion (110, 116).

5. Partie de boîtier (10) selon l'une quelconque des revendications 1 à 4, **caractérisée en ce qu'**une forme de l'ouverture (120) de ladite au moins une pastille de connexion (110, 116) correspond à une forme de section transversale de la broche de connexion (102), la dimension de l'ouverture (120) étant de préférence choisie pour être supérieure de 0,02 mm à 0,1 mm à la dimension correspondante de la broche de connexion (102).

6. Partie de boîtier (10) selon l'une quelconque des revendications 1 à 5, **caractérisée en ce que** pour la liaison de la broche de connexion (102) et de ladite au moins une pastille de connexion (110, 116), une liaison adhésive conductrice, une liaison soudée ou une liaison brasée est mise en œuvre qui, dans le cas d'une ouverture (120) réalisée sous forme d'ouverture de passage, est réalisée de préférence le long du contour de l'ouverture (120) de ladite au moins une pastille de connexion (110, 116), ou dans le cas d'une ouverture (120) réalisée sous forme de trou borgne, est réalisée de préférence sur toute la surface.

7. Partie de boîtier (10) selon l'une quelconque des revendications 1 à 6, **caractérisée en ce que** ladite au moins une pastille de connexion (110, 116) présente une forme qui est sélectionnée parmi des formes rondes, comme des cercles ou des ellipses, ou est sélectionnée parmi des formes polygonales, comme des rectangles, des carrés, des triangles ou des hexagones, le cas échéant respectivement à coins arrondis.

8. Partie de boîtier (10) selon l'une quelconque des revendications 1 à 7, **caractérisée en ce que** le corps de base (12) est relié au moins dans une zone de liaison dans le corps de base (12) à ladite au moins une pastille de connexion (110, 116) et/ou ladite au moins pastille de connexion (110, 116) présente une microstructuration sur une face tournée vers le corps de base (12).

9. Partie de boîtier (10) selon l'une quelconque des revendications 1 à 8, **caractérisée en ce que** le corps de base (12) et/ou ladite au moins une pastille de connexion (110, 116) présentent des creux (118) ou des structures pourvus d'au moins une contredépouille (119) avec laquelle le matériau isolant (112, 114) vient en prise pour relier le corps de base (12) à ladite au moins une pastille de connexion (110, 116).

10. Partie de boîtier (10) selon l'une quelconque des revendications 1 à 9, **caractérisée en ce que** les pastilles de connexion (110, 116) sont composées d'un matériau sélectionné parmi l'aluminium, les alliages d'aluminium, le cuivre, les alliages de cuivre, en particulier le laiton et le bronze, l'argent, l'or, le platine et les alliages d'argent, en particulier l'argent-nickel ou l'argent-zinc-oxyde.

11. Partie de boîtier (10) selon l'une quelconque des revendications 1 à 10, **caractérisée en ce que** la partie de boîtier (10) comprend en outre au moins un deuxième agencement de bornes de connexion (200) dans lequel une zone de connexion (210) est formée par un relief (202) dans le corps de base (12) ou est formée par une pastille de connexion supplémentaire qui est reliée de manière électriquement conductrice au corps de base (12), dans laquelle de préférence le relief (202) a été obtenu par formage du corps de base (12), en particulier au moyen d'un gaufrage.

12. Partie de boîtier (10) selon l'une quelconque des revendications 1 à 11, **caractérisée en ce qu'**une hauteur totale dudit au moins un agencement de bornes de connexion (100) et dudit au moins un deuxième agencement de bornes de connexion (200) est sélectionnée de manière identique, dans laquelle de préférence la hauteur totale des agencements de bornes de connexion (100, 200) est sélectionnée à partir d'une surface du corps de base (12) dans la plage de 10 % à 80 % de l'épaisseur de paroi du corps de base (12).

13. Partie de boîtier (10) selon l'une quelconque des revendications précédentes, **caractérisée en ce que** le matériau du corps de base (12) est sélectionné parmi un métal, en particulier le fer, les alliages de fer, les alliages de fer-nickel, les alliages de fer-nickel-cobalt, le KOVAR, l'acier, l'acier inoxydable, l'aluminium, les alliages d'aluminium, AlSiC, le magnésium, les alliages de magnésium, le titane ou les alliages de titane,
et/ou
**en ce que** le matériau de la broche de connexion (102) est sélectionné parmi le cuivre, un alliage de cuivre, l'aluminium, un alliage d'aluminium, le fer, un alliage de fer, un alliage fer-nickel, un alliage fer-nickel-cobalt, le KOVAR, le titane, un alliage de titane, l'acier, l'acier inoxydable, AlSiC, le magnésium, un alliage de magnésium.

14. Partie de boîtier (10) selon l'une quelconque des revendications précédentes, **caractérisée en ce que** le premier coefficient de dilatation thermique du corps de base (12) est supérieur d'au moins 5 % au deuxième coefficient de dilatation thermique du matériau de fixation (106).

15. Partie de boîtier (10) selon l'une quelconque des revendications précédentes, **caractérisée en ce que** la partie de boîtier (10) est réalisée comme un couvercle d'un boîtier et présente de préférence une bride de liaison périphérique (14) pour la liaison à une partie de boîtier supplémentaire.

16. Partie de boîtier (10) selon l'une quelconque des revendications précédentes, **caractérisée en ce que** ledit au moins un premier agencement de bornes de connexion (100) présente conjointement avec le corps de base (12) au niveau de l'ouverture de passage (20) une résistance à la flexion qui est au moins deux fois la résistance à la flexion du corps de base (12) sans le premier agencement de bornes de connexion (100).

17. Dispositif de stockage électrique, en particulier batterie ou condensateur, comprenant un boîtier et au moins une cellule de stockage, **caractérisé en ce que** le boîtier comprend une partie de boîtier (10) selon l'une quelconque des revendications 1 à 16.
